# EUROPEAN PATENT APPLICATION

(11) **EP 3 090 899 A1**
(43) Date of publication of application: **09.11.2016**
(21) Application number: 16165586.5
(22) Date of filing: 15.04.2016
(51) Int. Cl.: B60Q 1/08, F21S 8/10, H05B 33/08, H05B 37/02, G01S 13/93, G08G 1/16

(54) **ADAPTIVE LIGHTING APPARATUS**

(30) Priority: 02.05.2015 IN 1227DE2015
(71) Applicant: NXP B.V., 5656 AG Eindhoven (NL)
(72) Inventor: VILAKATHARA, Haridas, 5656 AG Eindhoven (NL)
(74) Representative: Miles, John Richard

(57) **Abstract**

One example discloses an adaptive lighting apparatus, comprising: a first input configured to receive a set of radar data; a lighting module configured to generate a visible illumination signal based on the set of radar data; and a first output configured to transmit the illumination signal. Another example discloses an article of manufacture including at least one non-transitory, tangible machine readable storage medium containing executable machine instructions for adaptive lighting, wherein the instructions comprise: receiving a set of radar data; generating a visible illumination signal based on the set of radar data; and transmitting the illumination signal.

## Description

The present specification relates to adaptive lighting.

Automotive vehicles can include a variety of different lamps to provide illumination under different operating conditions. Headlamps can be controlled to alternately generate low-beams and high-beams. Low-beams provide less illumination and are used at night to illuminate the forward path when other vehicles are present. High-beams provide significantly more light and are used to illuminate the vehicle's forward path when other vehicles are not present.

Driving at night is usually more dangerous than driving during the day. Pedestrians and cyclists on the roads are especially at high risk due to the limited visibility of motorists at night. This raises the importance of maximizing a driver's forward vision for night-time driving safety purpose. Drivers need to look as far ahead as possible for traffic signs, road geometry, other vehicles, pedestrians and potential hazards.

Also, car accident data shows that the rate of night time accidents is higher than that of day-time. This fact may be due to a number of factors, such as poor lighting condition at night that reduces the visual capability of the driver against hard to detect such as pedestrians, animals, and cyclists. At night it is very difficult to determine the nature of foreign objects by human eye from long distance under poorly lit conditions. Always run in high-beam position mode may be thought as a temporary solution to the problem described above. However this will be result in higher power consumptions as well as heating of the light assembly.

High-beams provide significantly more light and are used to illuminate the vehicle's forward path when other vehicles are not present. Since high-beams provide significantly more illumination of the forward path, it is always desirable to drive with high-beam on for a better road visibility to the driver. However this high intensity light beam can create a high-beam glare to an oncoming vehicle and may result in an accident. Similarly high-beam glare from a preceding vehicle is also a major contributor to the accidents. In both case the vehicle high-beam can momentarily 'dazzle' other road users and contribute to accidents.

Another critical problem with the traditional high-beam vehicle light is that, drivers usually do not turn the high-beams on or off when needed and instead, keep the headlights on in high-beam position in order to avoid frequent switching and often forget to dim the headlight in the face of oncoming or preceding traffic. This also can dazzle other road users and contribute to accidents. Alternatively remaining in low-beam illumination reduces the driver's visibility range and the ability to identify and respond to hazards ahead.

An adaptive head-light control could help address some of these concerns. Such adaptive systems can be based on an illumination based sensor for detecting the vehicle in front. Camera based solutions are also possible, where in a camera is used for detecting and classifying the type of vehicles in front and controlling the low/high-beam nature of the head-light. Alternatively, a simple CMOS light sensor can also be used to detect the existence of the vehicle in front.

### SUMMARY

According to an example embodiment, an adaptive lighting apparatus, comprising: a first input configured to receive a set of radar data; a lighting module configured to generate a visible illumination signal based on the set of radar data; and a first output configured to transmit the illumination signal.

In another example embodiment, the radar data includes an angle to a foreign object; and the illumination signal sets a light source beam pattern based on the angle.

In another example embodiment, the radar data includes a range to a foreign object; and the illumination signal updates a light source intensity based on the range.

In another example embodiment, the radar data includes a radar signature corresponding to a foreign object; and the illumination signal sets a light source beam pattern based on the radar signature.

In another example embodiment, further comprising an attribution module configured to classify the foreign object based on the radar signature; and the illumination signal sets a light source beam pattern, having a beam intensity that varies in azimuth and elevation, based on the classification.

In another example embodiment, the attribution module is configured to classify the foreign object by comparing the radar signature to a set of known foreign object radar signatures.

In another example embodiment, the attribution module is configured to classify using a best-match algorithm.

In another example embodiment, the set of known foreign object radar signatures includes radar signatures corresponding to at least one of: a road condition, a road feature, an environmental condition, a vehicle type, a vehicle feature, an animal type or a plant type.

In another example embodiment, further comprising a second input configured to receive a set of camera data; and the lighting module configured to modify the visible illumination signal based on the set of camera data.

In another example embodiment, the camera data includes an image signature corresponding to a foreign object; further comprising an attribution module configured to classify the foreign object based on the image signature; and the illumination signal modifies the visible illumination signal based on the classification.

In another example embodiment, the attribution module is configured to classify the foreign object as either self-illuminated or not self-illuminated based on the image signature.

In another example embodiment, further comprising a second input configured to receive at least one of: a set of ambient light data, a set of humidity data or a set of temperature data; and the lighting module configured to modify the visible illumination signal based on the at least one data set.

In another example embodiment, further comprising a second input configured to receive a set of parent object data including at least one of: a number of lighting sources, types of lighting sources, a current velocity or an Advanced Driver Assistance System attribute; and the lighting module configured to modify the visible illumination signal based on the parent object data.

In another example embodiment, the illumination signal includes at least one of: a lighting array activation signal or a lighting array illumination beam intensity signal.

In another example embodiment, the illumination signal includes a first lighting source control signal and a second lighting source control signal.

In another example embodiment, the first lighting source is an LED array and the second lighting source is a laser diode array.

In another example embodiment, the set of radar data includes an first angle to a first foreign object and a second angle to a second foreign object; and the first lighting source control signal illuminates the first foreign object with a first illumination beam intensity and the second lighting source control signal illuminates the second foreign object with a second illumination beam intensity.

In another example embodiment, the apparatus is included in a system, the system comprising: a radar sensor coupled to the first input and configured to generate the set of radar data; and first and second light sources coupled to the first output and responsive to the illumination signal.

In another example embodiment, an article of manufacture including at least one non-transitory, tangible machine readable storage medium containing executable machine instructions for adaptive lighting, the instructions comprise: receiving a set of radar data; generating a visible illumination signal based on the set of radar data; and transmitting the illumination signal.

In another example embodiment, the radar data includes a radar signature corresponding to a foreign object; further comprising: classifying the foreign object based on the radar signature; setting a light source beam pattern in the illumination signal, having a beam intensity that varies in azimuth and elevation, based on the classification; and directing the light source beam pattern at the foreign object.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings, in which:

### BRIEF DESCRIPTION OF THE DRAWINGS

Figure 1 is an example adaptive lighting apparatus.
Figure 2 is an example LED lighting source.
Figure 3 is an example LED lighting source beam pattern.
Figure 4 is an example pictorial diagram of a first operational scenario.
Figure 5 is an example pictorial diagram of a second operational scenario.
Figure 6 is an example pictorial diagram of a third operational scenario.
Figure 7A is an example list of instructions for enabling an adaptive lighting apparatus.
Figure 7B is a second example list of instructions for enabling an adaptive lighting apparatus.
Figure 8 is an example system for hosting instructions for enabling an adaptive lighting apparatus.

While the disclosure is amenable to various modifications and alternative forms, specifics thereof have been shown by way of example in the drawings and will be described in detail. It should be understood, however, that other embodiments, beyond the particular embodiments described, are possible as well.

### DETAILED DESCRIPTION

The adaptive head-light control systems discussed above may not: operate optimally under bad weather conditions; enable precise control of the head-light beam; enable tracking of oncoming vehicles. Some such systems can only detect an incoming vehicle if its head-lights are on. Other such systems cannot detect other types of foreign objects reliably (for example pedestrians, animals, cyclists, etc.).

An improved adaptive head-light solution would take care of the following situations:
∘ Selective blinding/dimming of the head-light towards an incoming vehicle to enhance the visibility of the incoming vehicle driver.
∘ Selective enhancement of head-light beam illumination on hard to detect foreign objects, especially in poor visibility conditions.
∘ Tracking capability to steer the light beam to selected (multiple targets) targets stated in (1) and (2) above.

In example embodiments discussed below, an adaptive lighting apparatus is discussed. In one set of example embodiments, the adaptive lighting apparatus is used with a vehicle having a radar sensor, LED lighting arrays a laser based head-light. The example apparatus could include an automotive high-beam control (HBC) module using car radar sensors along with a camera sensor to detect and classify foreign objects in terms of their type, range, relative velocity as well as their angle in front of a vehicle during night driving condition and then automatically adjust the head-light beam pattern using arrays of LED and laser diode based head-light assembly. Equipped vehicles can adjust the light beam angle and elevation plus the beam intensity to selectively illuminate the foreign object.

The apparatus in various embodiments could automatically track and adjust the beam pattern on a continuous manner when it detects multiple foreign objects in front. If the detected foreign object is an oncoming vehicle, then the light intensity will be reduced. In case of other hard to detect foreign objects light intensity can be increased. The apparatus can also switches the headlights to low-beam when the vehicle is driving in brightly lit urban areas or at lower speed by providing additional light sensor input and a speed sensor input.

In another embodiment, the adaptive lighting apparatus is used with a vehicle having conventional halogen/incandescent head-lights. Such conventional lighting based embodiments may limited to either switching between high and low-beam light or include a mechanical assembly for steering the conventional light.

Such embodiments, introduced above, can include always keeping the head-light at a high-beam/intensity level for maximum driver visibility, except when dimming is needed to avoid dazzling (e.g. presenting glare to) another driver.

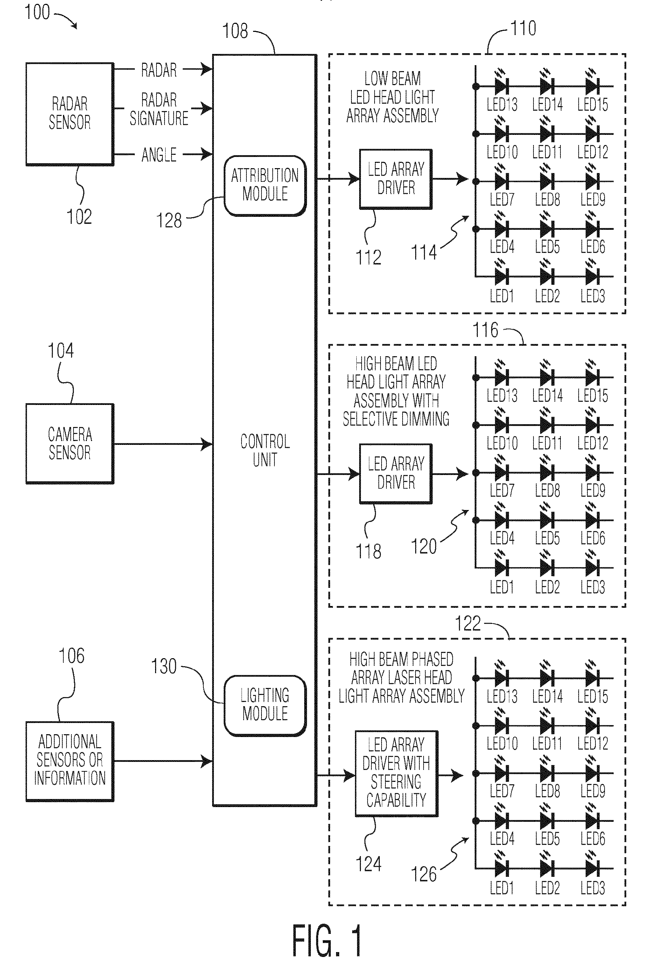

**Figure 1** is an example adaptive lighting apparatus 100. The example lighting apparatus 100 includes: a radar sensor 102, a camera sensor 104, additional sensors or information 106, a control unit 108 having an attribution module 128 and a lighting module 130, a first lighting source 110 (e.g. Low-beam) having a driver 112 and lighting array 114, a second lighting source 116 (e.g. High-beam) having a driver 118 and a lighting array 120, and a third lighting source 122 (e.g. Laser Light) having a driver 124 and a lighting array 126.

The radar sensor 102 in one example embodiment can be mounted to the front of an automotive vehicle so as to better detect other vehicles, people, road conditions, animals and so on in the path of the vehicle. More generally the radar sensor 102 is attached to a parent object (e.g. an automotive vehicle) an optimal location so as to better detect foreign objects (e.g. other vehicles, people, road conditions, animals and so on). The parent object is herein defined as any structure which includes the apparatus, systems, devices and functionality herein discussed. Foreign object are herein defined as any object or condition with which the parent object is designed to detect. In other example embodiments, more than one radar sensor 102 can be attached to the parent object.

The radar sensor 102 can provide the following information with respect to foreign objects in proximity to the parent object: angle of the foreign object with respect to the parent object; range between the parent object and the foreign object; relative velocity between the parent object and foreign objects; and a radar signature (i.e. radar cross-section (RCS)).

As will be discussed further below, the radar signature from the radar sensor 102 is used by modules in the control unit 108 to classify the foreign object (e.g. use a best-match routine to label the foreign object as either: a car, a truck, an animal, a wet road, a dry road, a pothole, a tree, a road edge, a road sign, a road marking, rain, snow, fog, ice, and so on).

In various embodiments, the radar sensor 102 operates in the 76-81 GHz range and is capable of capturing a 20MHz bandwidth radar signature.

The camera sensor 104 in one example embodiment is used by modules in the control unit 108 to aid in classification of the foreign object. For example the camera sensor 104 can determine whether the foreign object is self-illuminated (e.g. has headlights on and is thus likely a vehicle) or not self-illuminated (e.g. could be a person, a natural object or an animal). the camera sensor 104 can also be used to measure an intensity of the entire foreign object and based on the information modify how the control unit 108 commands the lighting sources 110, 116, 122 to dynamically illuminate the foreign object.

The additional sensors or information 106 can include: an ambient light sensor; a humidity sensor; a temperature sensor; and a set of parent object attributes. In the case where the parent object is an automotive vehicle, the set of parent object attributes can be obtained from the vehicle's ADAS (Advanced Driver Assistance Systems). The ADAS information includes a variety of sensory information, including the vehicle's speed. Knowledge of the parent object's ambient lighting environment can be used by the control unit 108 to determine if it's daytime or nighttime, or perhaps if the parent object is itself illuminated by a street light.

The lighting sources 110, 116, 122 can be any combination of an LED array, a laser diode array, an incandescent bulb, and so on. An LED array light source includes individual LED elements which can be positioned in various directions and varied in beam intensity (i.e. lumen output) to produce and steer a light source beam pattern in both azimuth and elevation. Such an array in one example can be selectively dimmed towards an incoming car and alternately brightened toward an unlit person next to the road.

Laser diode arrays have similar directional and intensity characteristics and can be used to steer multiple beams in both azimuth and elevation to illuminate hard to detect foreign objects. Even incandescent bulbs can be selectively dimmed and brightened in response to commands from the control unit 108.

The control unit 108 includes the attribution module 128 and the lighting module 130. The attribution module 128 inputs data signals from the radar sensor 102, the camera sensor 104, and any additional sensors or information 106. The attribution module 128 either minimally processes (e.g. angle and range information from the radar sensor 102) or significantly processes (e.g. foreign object classification from the radar signatures) these inputs.

For the minimally processed information, such as angle and range information, the attribution module 128 can pass such information to the lighting module 130 for eventual steering and beam intensity modulation of the lighting sources 110, 116, 122.

However for the significantly processed information, the attribution module 128 compares one or more radar signatures received from the radar sensor 102 to a library of stored radar signatures in order to classify the one or more foreign objects before a final set of steering and beam intensity modulation commands are sent to the lighting sources 110, 116, 122.

The library of stored radar signatures in various embodiments includes pre-classified objects having radar signatures for such as: a set of vehicles (e.g. car, truck, bicycle, etc.), a set of road conditions (e.g. wet, dry, icy, oily, paved road, dirt road, etc.), a set of environmental conditions (e.g. dry, raining, snowing, foggy, etc.) and a set of other foreign objects (e.g. people, animals, plants, trees, rocks, potholes, a road edge, a road sign, etc.).

The attribution module 128 then uses a ***best match algorithm*** to classify the radar signature from the radar sensor 102 as corresponding to a pre-classified foreign object whose radar signature best matches the radar signature from the radar sensor 102. The supplement, or verify, the radar signature classification, the attribution module 128 processes the camera sensor 104 input data, using image processing techniques, to classify the foreign object. The attribution module 128 can also use the camera sensor 104 input data to determine if the foreign object is self-illuminated or not. Self-illuminated foreign object tend to be oncoming vehicles, whereas objects that are not self-illuminated (e.g. are hard-to-detect) tend to be people, animals or obstructions of some sort.

The attribution module 128 processes the input signals from the radar sensor 102, the camera sensor 104, and any additional sensors or information 106 in a dynamic way that enables foreign objects to be tracked as they move with respect to the parent object (e.g. parent vehicle).

As will be discussed below, the lighting module 130 uses the foreign object's classification to steer and vary the beam intensity of the lighting sources 110, 116, 122 so as to provide, in one example, the driver of a vehicle (i.e. the parent object) as clear a view of the road ahead, without blinding passing vehicle drivers.

The control unit 108 also includes the lighting module 130. The lighting module 130 inputs data signals (e.g. angle, range and classification information) from the attribution module 128. The lighting module 130 then outputs signals to the lighting sources 110, 116, 122 based on these inputs. These output signals control the beam/element intensity for each lighting source element, thereby enabling the lighting source 110, 116, 122 lumen output to be steered in angle and elevation as well as varied in brightness.

Some example lighting module 130 output signal scenarios are now presented. For example, if the foreign object is another vehicle with its head-lights on, the beam intensity of lighting elements directed at the vehicle is decreased. If the foreign object is a hard to detect object such as a person walking nearby the road without any self-illumination, then the beam intensity of lighting elements directed at the person is increased.

Since each of the lighting elements are independently controlled, one lighting element on one side of the parent vehicle (i.e. parent object) can be increased for hard to detect objects, while another lighting element on another side of the parent vehicle can be decreased for passing cars. The lighting elements can also be steered in elevation such that a lower portion of a passing truck is illuminated while light toward the truck's driver's cab is reduced to avoid blinding the passing truck driver.

As the foreign objects are tracked by the radar sensor 102, the lighting module 130 will correspondingly vary the beam intensity of the various lighting source 110, 116, 122 elements at least in accordance with the examples provided above so as to ensure a maximum level of parent vehicle situational awareness while minimizing blinding passing drivers.

In additional example embodiments, the illumination beam intensity is a function of the range of foreign object and type/classification of the foreign object. The beam direction/pattern (azimuth and elevation) is also a function of the foreign object's angle with respect to the parent object. Higher beam illumination intensities (using laser headlight with phased array approach) can be directed upon hard to detect foreign object to improve the parent driver's visibility.

Such variable beam intensity also allows the adaptive lighting apparatus 100 to be deployed in a power efficient manner, primarily due to the fact that the power consuming high-beams, in one example embodiment, are steered only towards detection of hard to detect foreign objects than a blind high-beam.

Another alternate embodiment of the adaptive lighting apparatus includes a day-time algorithm, a low-speed algorithm and a high-speed algorithm.

In one example of the day-time processing algorithm, during day-time when the parent vehicle's lights are normally off, the parent vehicle's head-light can be switched back on based on if the radar sensor 102 detects an incoming vehicle approaching face to face with the parent vehicle and if the relative velocity between the vehicle is at a dangerously high level. The head-light can be flashed to give visual warning to the incoming vehicle. The flashing rate can be based on the relative velocity value (higher the relative velocity means higher the flash rate).

In one example of the low-speed processing algorithm, during night time under low-speed condition, it is may not be necessary to use the high-beam light. In this case only the low-beam LED array need to be working, thus saving power.

In one example of the high-speed processing algorithm, the high-beam LED array will be permanently on with selective dimming capabilities if an incoming vehicle is detected.

In another example embodiment, if an incoming vehicle is coming face to face with the parent vehicle (which is especially important on two way roads) at a dangerously high-speed. In this case the head-light can be flashed to provide a visual warning to the incoming vehicle driver.

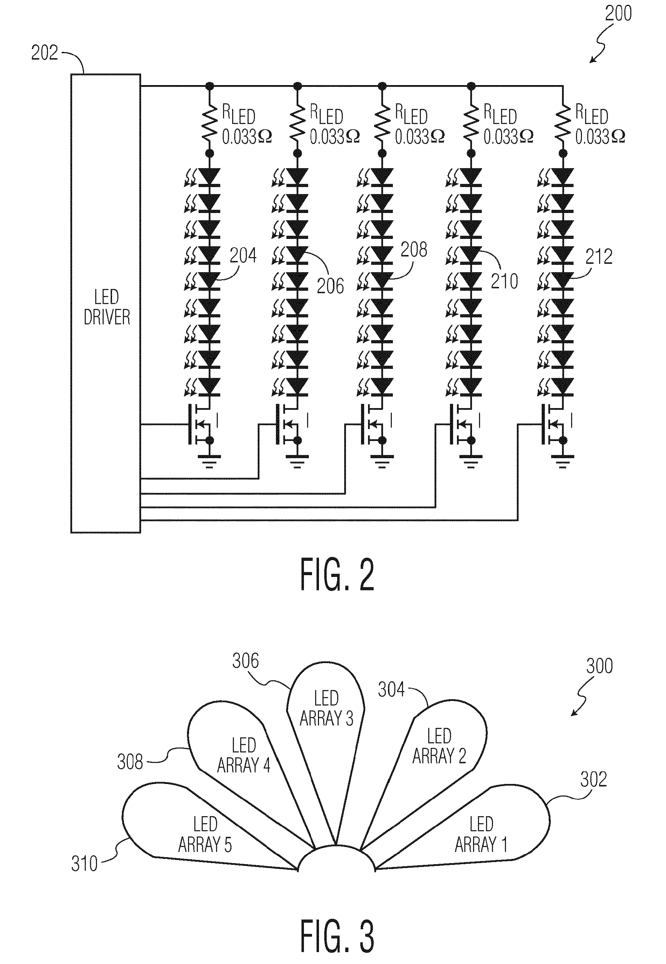

**Figure 2** is an example LED lighting source 200. The LED lighting source 200 includes an LED driver 202 under command of the lighting module 130 output signals. The LED driver 202 sends activation and power to a first LED array 204, a second LED array 206, a third LED array 208, a fourth LED array 210 and a fifth LED array 212. Each of these LED arrays contain individual LEDs. Thus the lighting module 130 output signals can individually turn each LED element on/off and vary each LED element's output power (i.e. beam intensity). This enables the LED lighting source 200 to be steered in angle and elevation and varied in output power. A similar structure could be used for a Laser diode array.

**Figure 3** is an example LED lighting source beam pattern 300 from the LED lighting source 200. The LED lighting source beam pattern 300 includes: a first LED array beam pattern 302 generated by the first LED array 204, a second LED array beam pattern 304 generated by the second LED array 206, a third LED array beam pattern 306 generated by the third LED array 208, a fourth LED array beam pattern 308 generated by the fourth LED array 210, and a fifth LED array beam pattern 310 generated by the fifth LED array 212.

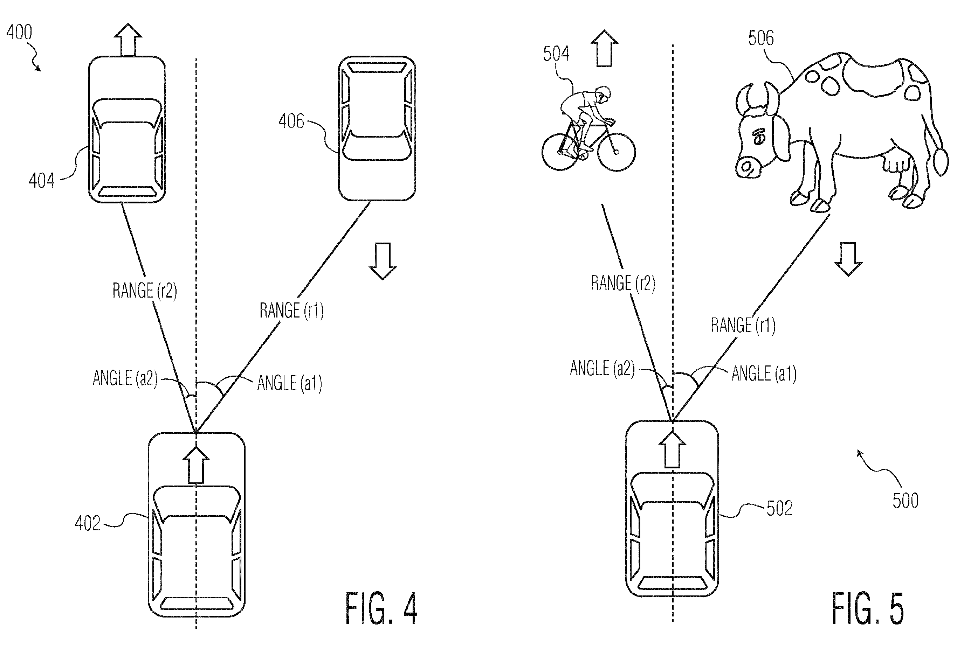

**Figure 4** is an example pictorial diagram of a first operational scenario 400 involving self-illuminated foreign objects. In the first operational scenario 400 a parent object 402 (e.g. parent vehicle) is traveling behind a first foreign object 404 (e.g. a car) at an angle (a2) and at a range (r2). The adaptive lighting apparatus 100 keeps track of the first foreign object 404, as discussed above, and perhaps keeps a higher beam intensity of a lower part (e.g. rear bumper and trunk) of the first foreign object 404 and a lower beam intensity on an upper part of the first foreign object 404 (e.g. corresponding to the driver's rear-view mirror).

In the first operational scenario 400 the parent object 402 (e.g. parent vehicle) is also traveling past a second foreign object 406 (e.g. a car) at an angle (a1) and at a range (r1). The adaptive lighting apparatus 100 also keeps track of the second foreign object 406 and perhaps keeps a higher beam intensity of a lower part (e.g. front bumper and trunk) of the second foreign object 406 and a lower beam intensity on an upper part of the second foreign object 406 (e.g. corresponding to the driver's face).

**Figure 5** is an example pictorial diagram of a second operational scenario 500 involving hard to detect foreign objects. In the second operational scenario 500 a parent object 502 (e.g. parent vehicle) is intersecting with a first foreign object 504 (e.g. a bicycle) at an angle (a2) and at a range (r2). The adaptive lighting apparatus 100 keeps track of the first foreign object 504 and perhaps keeps a higher beam intensity on all of the first foreign object 504 for maximum visibility to both the driver of the parent vehicle 502 and the bicyclist 504.

In the second operational scenario 500 the parent object 502 (e.g. parent vehicle) is also closing in on a second foreign object 506 (e.g. an animal) at an angle (a1) and at a range (r1). The adaptive lighting apparatus 100 keeps track of the animal 506 and perhaps not only keeps the animal 506 fully illuminated, but also directs additional light toward the animal 506 due to the animal's 506 less predictable nature.

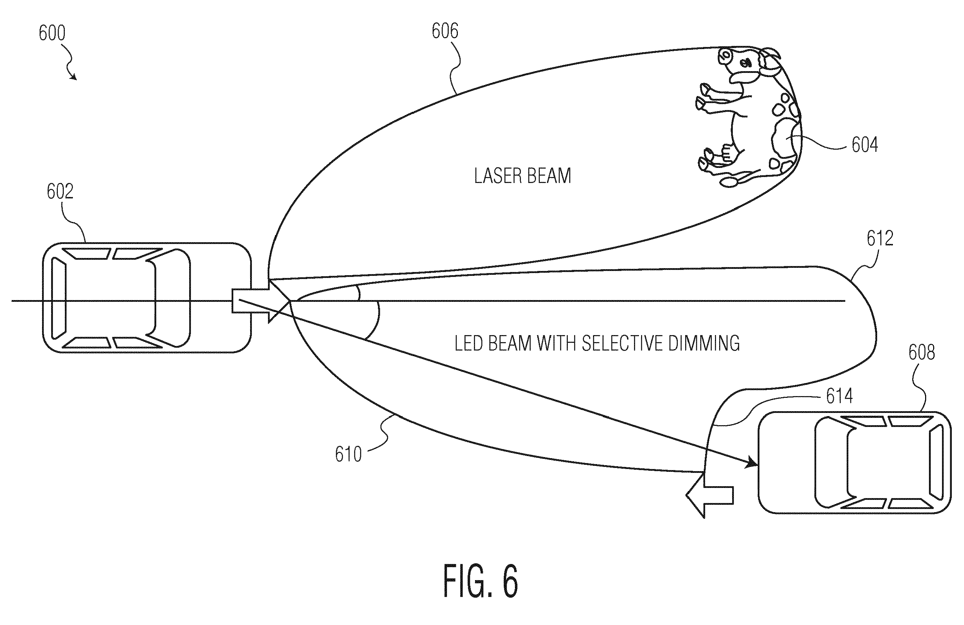

**Figure 6** is an example pictorial diagram of a third operational scenario 600 involving a mix of hard to detect and self-illuminated foreign objects. In the third operational scenario 600 a parent object 602 (e.g. parent vehicle) is passing a first foreign object 604 (e.g. an animal) at the left and a second foreign object 608 (e.g. another vehicle) on the right. Due to the unpredictability of the animal 604, the adaptive lighting apparatus 100 directs a laser diode array beam having a first beam pattern 606 at the animal 604.

However, due to the more predictable nature of the other vehicle 608, the adaptive lighting apparatus 100 directs a second beam pattern 610 at the vehicle 608, where the second beam pattern 610 includes a first intensity region 612 and a second intensity region 614. The first intensity region 612 is at a higher beam intensity for maximum visibility of the road ahead. The second intensity region 614 is at a lower beam intensity for reasonable visibility of the oncoming vehicle 608 while not blinding the oncoming vehicle's 608 driver.

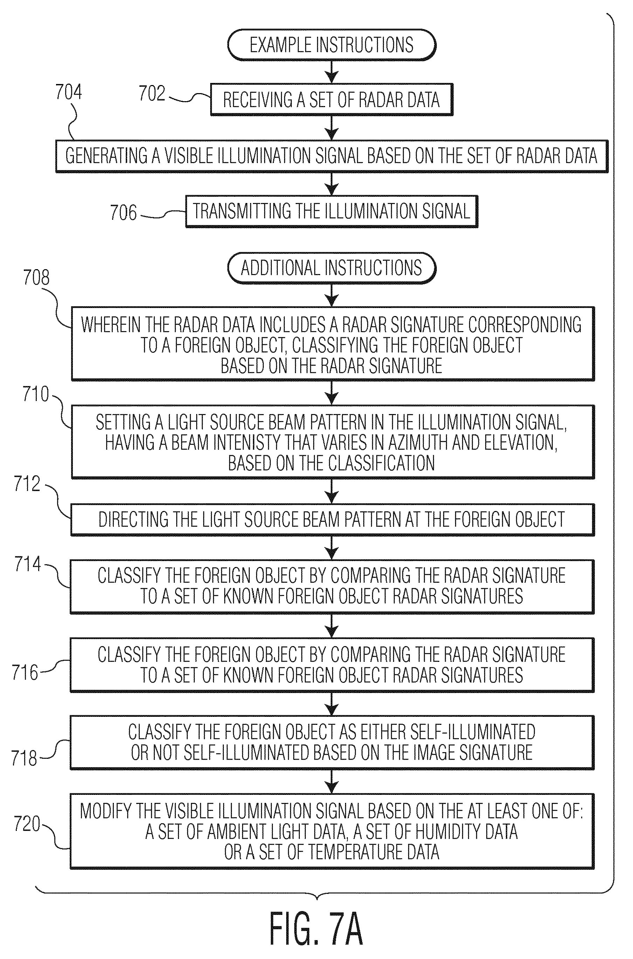

**Figure 7A** is an example list of instructions for enabling an adaptive lighting apparatus. The order in which the instructions are discussed does not limit the order in which other example embodiments implement the instructions. Additionally, in some embodiments the instructions are implemented concurrently.

A first example instruction set begins in 702, by receiving a set of radar data. In 704, generating a visible illumination signal based on the set of radar data. Then in 706, transmitting the illumination signal.

The instructions above can be augmented with one or more of the following additional instructions, presented in no particular order.

The additional instructions include: 708, wherein the radar data includes a radar signature corresponding to a foreign object, classifying the foreign object based on the radar signature. 710, setting a light source beam pattern in the illumination signal, having a beam intensity that varies in azimuth and elevation, based on the classification. 712, directing the light source beam pattern at the foreign object. 714, classify the foreign object by comparing the radar signature to a set of known foreign object radar signatures. 716, classify the foreign object by comparing the radar signature to a set of known foreign object radar signatures. 718, classify the foreign object as either self-illuminated or not self-illuminated based on the image signature. 720, modify the visible illumination signal based on the at least one of: a set of ambient light data, a set of humidity data or a set of temperature data.

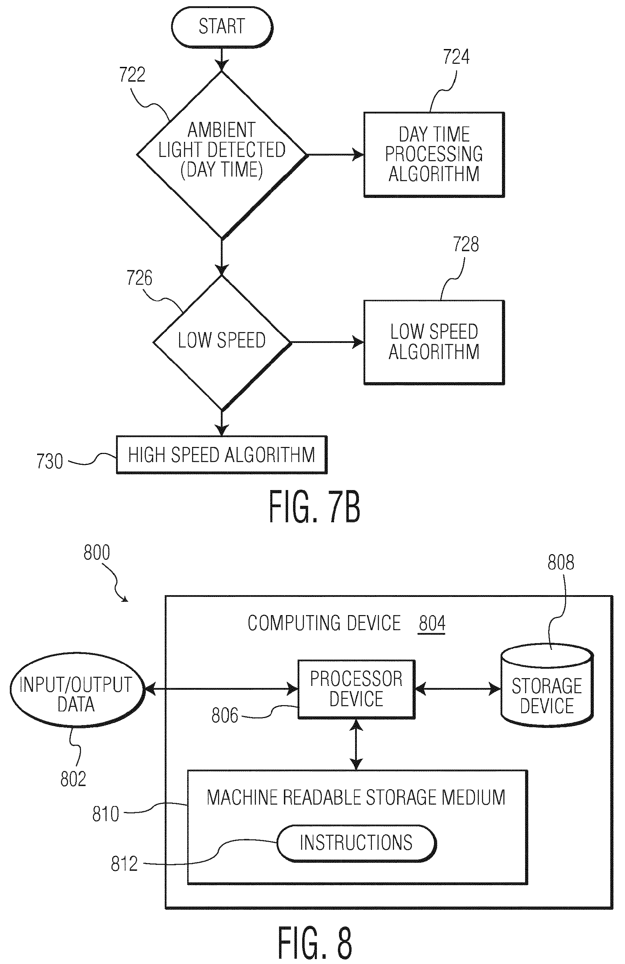

While these instructions have been presented in example orders of execution, other orderings, such as discussed with respect to **Figure 7B**, are also possible.

**Figure 7B** is a second example list of instructions for enabling an adaptive lighting apparatus. The order in which the instructions are discussed does not limit the order in which other example embodiments implement the instructions.

In 722, is ambient light detected (if yes go to 724). In 724, activate a day-time processing algorithm if ambient light is detected. In 726, is vehicle traveling at low-speed (if yes go to 728. In 728, activate a low-speed algorithm if vehicle traveling at low-speed. In 730, activate a high-speed algorithm if vehicle not traveling at low-speed.

**Figure 8** is an example system 800 for hosting instructions for enabling an adaptive lighting apparatus. The system 800 shows an input/output data 802 interface with an electronic apparatus 804. The electronic apparatus 804 includes a processor 806, a storage device 808, and a non-transient machine-readable storage medium 810. The machine-readable storage medium 810 includes instructions 812 which control how the processor 806 receives input data 802 and transforms the input data into output data 802, using data within the storage device 808. Example instructions 812 stored in the machine-readable storage medium 810 are discussed elsewhere in this specification. The machine-readable storage medium in an alternate example embodiment is a non-transient computer-readable storage medium.

The processor (such as a central processing unit, CPU, microprocessor, application-specific integrated circuit (ASIC), etc.) controls the overall operation of the storage device (such as random access memory (RAM) for temporary data storage, read only memory (ROM) for permanent data storage, firmware, flash memory, external and internal hard-disk drives, and the like). The processor device communicates with the storage device and non-transient machine-readable storage medium using a bus and performs operations and tasks that implement one or more instructions stored in the machine-readable storage medium. The machine-readable storage medium in an alternate example embodiment is a computer-readable storage medium.

The instructions and/or flowchart steps in the above Figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An adaptive lighting apparatus, comprising:
a first input configured to receive a set of radar data;
a lighting module configured to generate a visible illumination signal based on the set of radar data; and
a first output configured to transmit the illumination signal.

2. The apparatus of claim 1
wherein the radar data includes an angle to a foreign object; and
wherein the illumination signal sets a light source beam pattern based on the angle.

3. The apparatus of any preceding claim:
wherein the radar data includes a range to a foreign object; and
wherein the illumination signal updates a light source intensity based on the range.

4. The apparatus of any preceding claim
wherein the radar data includes a radar signature corresponding to a foreign object; and
wherein the illumination signal sets a light source beam pattern based on the radar signature.

5. The apparatus of claim 4
further comprising an attribution module configured to classify the foreign object based on the radar signature; and
wherein the illumination signal sets a light source beam pattern, having a beam intensity that varies in azimuth and elevation, based on the classification.

6. The apparatus of claim 5
wherein the attribution module is configured to classify the foreign object by comparing the radar signature to a set of known foreign object radar signatures.

7. The apparatus of claim 5 or 6
wherein the attribution module is configured to classify using a best-match algorithm.

8. The apparatus of claim 6
wherein the set of known foreign object radar signatures includes radar signatures corresponding to at least one of: a road condition, a road feature, an environmental condition, a vehicle type, a vehicle feature, an animal type or a plant type.

9. The apparatus of any preceding claim
further comprising a second input configured to receive a set of camera data; and wherein the lighting module configured to modify the visible illumination signal based on the set of camera data.

10. The apparatus of claim 9
wherein the camera data includes an image signature corresponding to a foreign object; further comprising an attribution module configured to classify the foreign object based on the image signature; and
wherein the illumination signal modifies the visible illumination signal based on the classification.

11. The apparatus of claim 10
wherein the attribution module is configured to classify the foreign object as either self-illuminated or not self-illuminated based on the image signature.

12. The apparatus of any preceding claim
further comprising a second input configured to receive at least one of: a set of ambient light data, a set of humidity data or a set of temperature data; and
wherein the lighting module configured to modify the visible illumination signal based on the at least one data set.

13. The apparatus of any preceding claim
further comprising a second input configured to receive a set of parent object data including at least one of: a number of lighting sources, types of lighting sources, a current velocity or an Advanced Driver Assistance System attribute; and
wherein the lighting module configured to modify the visible illumination signal based on the parent object data.

14. The apparatus of any preceding claim
wherein the illumination signal includes at least one of: a lighting array activation signal or a lighting array illumination beam intensity signal.

15. The apparatus of any preceding claim
wherein the illumination signal includes a first lighting source control signal and a second lighting source control signal.
